(19) Europäisches Patentamt
European Patent Office
Office européen des brevets

(11) EP 2 540 772 B1

(12) **EUROPEAN PATENT SPECIFICATION**

(45) Date of publication and mention of the grant of the patent:
**29.03.2017 Bulletin 2017/13**

(21) Application number: **11744406.7**

(22) Date of filing: **15.02.2011**

(51) Int Cl.:
***C08L 27/06*** *(2006.01)* ***C08K 5/053*** *(2006.01)*
***C08K 5/098*** *(2006.01)* ***C08K 5/20*** *(2006.01)*

(86) International application number:
**PCT/JP2011/000830**

(87) International publication number:
**WO 2011/102115 (25.08.2011 Gazette 2011/34)**

(54) **WEATHER-RESISTANT VINYL CHLORIDE RESIN COMPOSITION**

WETTERBESTÄNDIGE VINYLCHLORIDHARZZUSAMMENSETZUNG

COMPOSITION DE RÉSINE DE CHLORURE DE VINYLE RÉSISTANTE AUX INTEMPÉRIES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2010 JP 2010035963**

(43) Date of publication of application:
**02.01.2013 Bulletin 2013/01**

(73) Proprietor: **ADEKA CORPORATION**
**Tokyo**
**1160012 (JP)**

(72) Inventors:
- **ODAGIRI, Keiichi**
  **Saitama-shi**
  **Saitama 336-0022 (JP)**
- **SENGOKU, Tadashi**
  **Saitama-shi**
  **Saitama 336-0022 (JP)**

(74) Representative: **Raynor, Stuart Andrew**
**J A Kemp**
**14 South Square**
**Gray's Inn**
**London WC1R 5JJ (GB)**

(56) References cited:
**EP-A1- 2 336 237**
**JP-A- 3 237 140**
**JP-A- 6 100 749**
**JP-A- 47 004 869**
**JP-A- 60 127 340**
**JP-A- 63 035 658**
**JP-B2- 50 028 425**

- **DATABASE WPI Week 198533 Thomson Scientific, London, GB; AN 1985-200882 XP002724964, & JP S60 127340 A (CI KASEI CO LTD) 8 July 1985 (1985-07-08)**
- **DATABASE WPI Week 199419 Thomson Scientific, London, GB; AN 1994-156778 XP002724965, & JP H06 100749 A (ASAHI DENKA KOGYO KK) 12 April 1994 (1994-04-12)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 540 772 B1

## Description

### TECHNICAL FIELD

The present invention relates to vinyl chloride resin composition suitable for use in transparent products, and for more detail relates to vinyl chloride resin composition for transparent products wherein heavy-metal stabilizers such as tin stabilizers are not used.

### BACKGRAOUND ART

Vinyl, chloride resin, wherein the hardness can be easily adjusted by adding plasticizer, has various uses. In particular, hard vinyl chloride resin composition which does not contain any plasticizer at all, or semihard vinyl chloride resin composition which contains a small amount of plasticizer is excellent in rigidity, therefore, it is widely used for building materials or the like. Such hard vinyl chloride resin composition or semihard vinyl chloride resin composition is sometimes subjected to high temperature and pressure not only in processing but also as a molded article, therefore, higher quality is required in heat stability and weather resistance.

Molded articles obtained by hard transparent vinyl chloride resin composition are used for a lot of products such as cases, industrial boards, decorative boards, film and sheet wherein the glass-like transparency is required. On the other hand, it is known that vinyl chloride resin composition has a disadvantage in that the stability is insufficient against light and heat, and also the decomposition tends to occur mainly due to dehydrohalogenation when hot forming and processing are carried out or when products are used. In the past, for the purpose of improving such disadvantages, various kinds of stabilizers such as organic acid metallic salt, an organotin compound, an organic phosphite compound, an epoxy compound, a $\beta$-diketone compound, antioxidant and ultraviolet absorber have been blended to improve the stability of vinyl chloride resin.

From the viewpoint of being at an advantage in terms of cost, heavy-metal stabilizers such as lead and cadmium have been used as the above stabilizer. However, recently, concerns about environmental problems have been growing and impacts of heavy-metal toxicity or the like on the environment have become a problem, which leads to a tendency to use barium-zinc complex stabilizers. In recent years, however, impacts of barium on the environment began to be concerned. Therefore, it is hoped to switch to calcium-zinc, magnesium-zinc or calcium- magnesium-zinc complex stabilizers which are further lower in toxicity.

From such standpoints, as a stabilization method of vinyl chloride resin, a method for adding an organic acid calcium salt, organic acid zinc salt, basic salt of phosphorous acid and hydrotalcite compound (Patent document 1); or a method for adding an organic acid alkaline-earth metal salt, organic acid zinc salt, basic zinc phosphate and hydrotalcite compound (Patent document 2) are proposed. However, even though these are combined when used, performances such as heat resistance were insufficient. In addition, in these references, there is no description concerning transparency and there is no suggestion concerning improvement of transparency

Furthermore, a vinyl chloride type foaming resin composition for a foaming molded article prepared by adding an inorganic filler, a zinc compound, a zinc-modified hydrotalcite compound and a thermally decomposable organic foaming agent or the like (Patent document 3), and also a vinyl chloride resin composition for food packaging which is blended with an adipic acid ester plasticizer, calcium salt of organic carboxylic acid and a zinc-modified hydrotalcite compound (Patent document 4) are proposed. However, in any of these references, there is no description concerning transparency. Therefore, knowledge about transparency improvement cannot be obtained from these references.

Moreover, a tin stabilizer is proposed as a stabilizer for a vinyl chloride resin which can improve transparency (Patent documents 5 and 6). However, tin is not preferable as well, from the viewpoint of damage to the environment such as toxicity. In addition, since a number of tin stabilizers are liquid, vinyl chloride resin using these had a problem in that not only slipping properties of molten resin in a mold process declined, but also a heat deflection temperature (softening point) of a molded object decreased.

Besides, a vinyl chloride resin blended with a calcium-zinc stabilizer, a magnesium-zinc stabilizer or a calcium-magnesium-zinc stabilizer often has trouble on discoloration resistance when they are used for products, which require weather resistance.

Therefore, a stabilizer, which can impart both of transparency and excellent discoloration resistance to a vinyl chloride resin, is required.

### PRIOR ART DOCUMENT

### PATENT DOCUMENT

Patent document 1: Japanese unexamined Patent Publication Tokkaihei 9-67489
Patent document 2: Japanese unexamined Patent Publication Tokkai 2003-160707
Patent document 3: Japanese unexamined Patent Publication Tokkaihei 3-237140
Patent document 4: Japanese unexamined Patent Publication Tokkaihei 6-100749
Patent document 5: Japanese unexamined Patent Publication Tokkaisho 62-4739
Patent document 6: Japanese unexamined Patent Publication Tokkai 2008-1840

SUMMARY OF THE INVENTION

PROBLEMS TO BE SOLVED BY THE INVENTION

Therefore, the first object of the present invention is to provide a vinyl chloride resin composition for transparent products, which has not only high transparency without using heavy-metal stabilizers such as lead, tin and barium but also excellent weather resistance, heat stability and discoloration resistance.
The second object of the present invention is to provide a transparent molded article made from vinyl chloride, which has not only high transparency but also excellent weather resistance, heat stability and discoloration resistance.

MEANS TO SOLVE THE PROPBLEM

Namely, the present invention is a vinyl chloride resin composition for transparent products, comprising (A) 0.001 to 10 mass parts of at least one kind of organic acid zinc salt, (B) 0.001 to 10 mass parts of at least one kind of zinc- modified hydrotalcite compound and (C) 1 to 20 mass parts of oxanilide ultraviolet absorber represented by the following general formula (I) relative to 100 mass parts of vinyl chloride resin; and a transparent molded article obtained by molding the said vinyl chloride resin composition for transparent products.

General Formula (I):

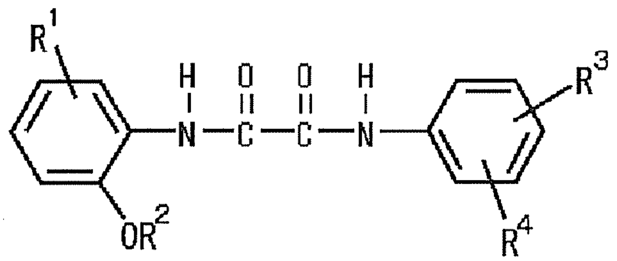

(I)

$R^1$ in the formula is a hydrogen atom or a straight-chain or branched alkyl group having 1 to 12 carbon atoms, $R^2$ is a straight-chain or branched alkyl group having 1 to 12 carbon atoms, $R^3$ and $R^4$ are each independently a hydrogen atom or a straight-chain or branched alkyl group having 1 to 18 carbon atoms.
It is further preferable that the vinyl chloride resin composition for transparent products of the present invention contains 0.001 to 1.0 mass parts of at least one kind of sugar alcohol as a component (D).
In addition, it is preferable that the abovementioned (B) zinc-modified hydrotalcite compound is a zinc-modified hydrotalcite compound represented by the following general formula (II).

General Formula (II): $M_{y1}Zn_{y2}Al_x(OH)_2(CO_3)_{x/2} \cdot mH_2O$ (II)

M in the formula is magnesium, or magnesium and calcium, x, y1 and y2 are numbers satisfying conditions represented by the following formulae respectively, m is 0 or an optional positive number; $0< x\leq0.5$, $y1+y2=1-x$, $y1\geq y2$, $0.3\leq y1<1$, $0<y2<0.5$.
Moreover, it is preferable that the vinyl chloride resin composition for transparent articles of the present invention does not contain an organotin compound.

EFFECT OF THE INVENTION

A molded product having not only high transparency but also excellent weather resistance, heat stability and

discoloration resistance can be manufactured by using the vinyl chloride resin composition for transparent products of the present invention.

EMBODYMENTS FOR CARRYING OUT THE INVENTION

In the vinyl chloride resin composition for the transparent products of the present invention, examples of organic acids used for organic acid zinc salt of the component (A) are carboxylic acid, organophosphorus acid or phenols. The aforementioned organic acid zinc salt may be any of acid salt, basic salt or perbasic salt.

Examples of the above carboxylic acid are, for example, caproic acid, caprylic acid, pelargonic acid, 2-ethylhexylic acid, capric acid, neodecanoic acid, undecylenic acid, lauric acid, myristic acid, palmitic acid, stearic acid, isostearic acid, 12-hydroxystearic acid, chlorostearic acid, 12-ketostearic acid, phenylstearic acid, ricinoleic acid, linoleic acid, linolenic acid, oleic acid, arachic acid, behenic acid, erucic acid, brassidic acid and similar acid; and mixtures of the above naturally-produced acids such as tallow fatty acid, coconut oil fatty acid, tung oil fatty acid, soybean fatty acid and cotton seed oil fatty acid; benzoic acid, p-t-butylbenzoic acid, ethylbenzoic acid, isopropylbenzoic acid, toluic acid, xylic acid, salicylic acid, 5-t-octylsalicylic acid, naphtheric acid, cyclohexanecarboxylic acid or the like. Examples of the above organic phosphoric acids are mono- or di- octylphosphoric acid, mono- or di- dodecylphosphoric acid, mono- or di-octadecylphosphoric acid, mono-or di- (nonylphenyl) phosphoric acid, phosphonic acid nonylphenyl ester, phosphonic acid stearyl ester or the like.

Examples of the above phenols are phenol, cresol, ethylphenol, cyclohexylphenol, nonylphenol and dodecylphenol or the like.

Regarding the organic acid zinc salt used as the component (A) in the present invention, only one kind of them may be used, or two or more kinds of them may be used together. In any case, it is preferable to use zinc salts of organic carboxylic acid in particular from the viewpoints of thermal stability and transparency of the composition of the present invention.

In addition, it is required that the content of the above organic acid zinc salts used as the component (A) is 0.001 to 10 mass parts relative to 100 mass parts of vinyl chloride resin, and 0.01 to 5 mass parts are preferable. If the content of the above organic acid zinc salts is less than 0.001 mass parts, discoloration resistance and weather resistance are insufficient. If it is more than 10 mass parts, heat stability deteriorates.

In the vinyl chloride resin composition for transparent products of the present invention, the zinc-modified hydrotalcite compound used as the component (B) in the present invention is a double salt compound having magnesium, zinc and aluminum as a metal composition, or a double salt compound having magnesium, calcium, zinc and aluminum as a metal composition. In the present invention, it is preferable to use a double salt compound, particularly, having magnesium, zinc and aluminum as a metal composition from the viewpoint of transparency

These double salt compounds can be obtained by treating hydrotalcite compounds using a zinc compound by the usual methods. These double salt compounds may be zinc-modified hydrotalcite compounds obtained by treating with a zinc compound when the above hydrotalcite compounds are synthesized or by treating with a zinc compound after the synthesis. In the present invention, commercial products can also be used. These zinc-modified hydrotalcite compounds are described in, for example, Japanese Examined Patent Publication Tokkosho 46-2280, Japanese Examined Patent Publication Tokkosho 47-32198, Japanese Examined Patent Publication Tokkosho 50-30039, Japanese Examined Patent Publication Tokkosho 48-29477 and Japanese Examined Patent Publication Tokkosho 51-29129.

In the present invention, from the viewpoints of workability, heat stability and transparency, it is preferable to use compounds represented by the following general formula (II) as the zinc-modified hydrotalcite compounds used as the component (B).

$$M_{y1}Zn_{y2}Al_x(OH)_2(CO_3)_{x/2} \cdot mH_2O \qquad (II)$$

M in the formula (II) represents magnesium, or magnesium and calcium. However, in particular magnesium is preferable from the viewpoint of transparency. x, y1 and y2 respectively are numbers satisfying the conditions represented by the following relational expressions, m represents 0 or optional positive numbers.

$$0<x\leq 0.5, \quad y1+y2=1-x, \quad y1\geq y2, \quad 0.3\leq y1<1, \quad 0<y2<0.5.$$

Specific examples of the zinc-modified hydrotalcite compounds used as the component (B) are as follows.

$$Mg_{0.38}Zn_{0.3}Al_{0.32}(OH)_2(CO_3)_{0.16} \cdot 0.2H_2O$$

$Mg_{0.45}Zn_{0.23}Al_{0.32}(OH)_2(CO_3)_{0.16}$

$Mg_{0.48}Zn_{0.18}Al_{0.34}(OH)_2(CO_3)_{0.17}$

$Mg_{0.48}Zn_{0.2}Al_{0.32}(OH)_2(CO_3)_{0.16}$

$Mg_{0.5}Zn_{0.17}Al_{0.33}(OH)_2(CO_3)_{0.165} \bullet 0.45H_2O$

$Mg_{0.5}Zn_{0.18}Al_{0.32}(OH)_2(CO_3)_{0.16}$

$Mg_{0.8}Zn_{0\cdot 2}Al_{0.3}(OH)_2(CO_3)_{0.16}$

$Mg_{0.5}Zn_{0.2}Al_{0.3}(OH)_2(CO_3)_{0.15} \bullet 0.52H_2O$

$Mg_{0.5}Zn_{0.25}Al_{0.25}(OH)_2(CO_3)_{0.125}$

$Mg_{0.51}Zn_{0.17}Al_{0.32}(OH)_2(CO_3)_{0.16}$

$Mg_{0.52}Zn_{0.16}A_{10.32}(OH)_2(CO_3)_{0.16} \bullet 0.5H_2O$

$Mg_{0.55}Zn_{0.15}Al_{0.32}(OH)_2(CO_3)_{0.15}$

$Mg_{0.6}Zn_{0.14}Al_{0.26}(OH)_2(CO_3)_{0.13}$

$Mg_{0.6}Zn_{0.16}Al_{0.24}(OH)_2(CO_3)_{0.12}$

$Mg_{0.6}Zn_{0.2}Al_{0.2}(OH)_2(CO_3)_{0.1}$

$Mg_{0\cdot 4}Ca_{0.1}Zn_{0.18}Al_{0.32}(OH)_2(CO_3)_{0.16}$

$Mg_{0.3}Ca_{0.2}Zn_{0.2}Al_{0.3}(OH)_2(CO_3)_{0.15}$

$Mg_{0.5}Zn_{0.17}Al_{0.33}(OH)_2(CO_3)_{0.17} \bullet 0.5H_2O$

$Mg_{0.5}Zn_{0.17}Al_{0.33}(OH)_2(CO_3)_{0.17} \bullet 0.42H_2O$

$Mg_{0.6}Zn_{0.16}Al_{0.24}(OH)_2(CO_3)_{0.12} \bullet 0.45H_2O$

$Mg_{0.5}Zn_{0.25}Al_{0.25}(OH)_2(CO_3)_{0.13} \bullet 0.39H_2O$

$Mg_{0.5}Zn_{0.17}Al_{0.33}(OH)_2(CO_3)_{0.17}$

$Mg_{0.5}Zn_{0.25}Al_{0.25}(OH)_2(CO_3)_{0.13}$

Examples of commercial products are Alkamizer 4 (Alkamizer P-93) and Alkamizer 7 (names of commercial products manufactured by Kyowa Chemical Industry Co., Ltd) or the like. In particular, it is preferable to use the Alkamizer 4 (Alkamizer P-93) from the viewpoint of transparency. In the present invention, only one kind of these zinc-modified hydrotalcite compounds may be used, or two or more kinds of them may be used together.

In addition, it is preferable that a refractive index of zinc-modified hydrotalcite compounds used as the component (B) is 1.52 to 1.56 from the viewpoint of transparency.

In the present invention, materials can also be used wherein the surfaces of the above zinc-modified hydrotalcite compounds are coated with higher fatty acids such as stearic acid, higher fatty acid metallic salts such as oleic acid alkali metallic salt, organic sulfonic acid metallic salts such as dodecylbenzenesulfonic acid alkali metallic salts, higher fatty acid amides, higher fatty acid esters, waxes or the like.

The amount of zinc-modified hydrotalcite compound of the component (B) used in the present invention is 0.001 to 10 mass parts relative to 100 mass parts of polyvinyl chloride resin, however, 0.05 to 5 mass parts are more preferable. If the amount used is less than 0.001 mass parts, the heat stability of the resin composition is insufficient. If it exceeds 10 mass parts, performance deterioration such as discoloration resistance deterioration occurs in the resin composition.

An oxanilide ultraviolet absorber, used as the component (C) in the vinyl chloride resin composition for transparent products of the present invention, is represented by the following general formula (I).

General Formula (I)

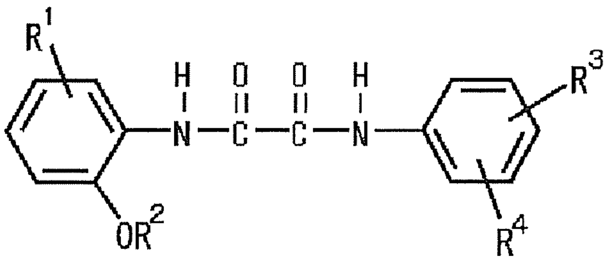

(I)

$R^1$ in the formula (I) is a hydrogen atom or a straight-chain or branched alkyl group having 1 to 12 carbon atoms, $R^2$ is a straight-chain or branched alkyl group having 1 to 12 carbon atoms, $R^3$ and $R^4$ are each independently a hydrogen atom, or a straight-chain or branched alkyl group having 1 to 18 carbon atoms.

Examples of $R^1$ of the above formula (I) are methyl, ethyl, propyl, isopropyl, butyl, isobutyl, sec-butyl, tert-butyl, amyl, tert-amyl, hexyl, heptyl, octyl, isooctyl, 2-ethylhexyl, 1,1,3,3-tetramethylbutyl, nonyl, decyl, isodecyl, undecyl, dodecyl and isododecyl. From the viewpoints of weather resistance and discoloration resistance, it is preferable that $R^1$ is a hydrogen atom or a tert-butyl group.

Examples of $R^2$ of the above formula (I) are methyl, ethyl, propyl, isopropyl, butyl, isobutyl, sec-butyl, tert-butyl, amyl, tert-amyl, hexyl, heptyl, octyl, isooctyl, 2-ethylhexyl, 1,1,3,3-tetramethylbutyl, nonyl, decyl, isodecyl, undecyl, dodecyl and isododecyl. From the viewpoints of weather resistance and discoloration resistance, it is preferable that $R^2$ is an ethyl group.

Examples of $R^3$ and $R^4$ of the above formula (I) are methyl, ethyl, propyl, isopropyl, butyl, isobutyl, sec-butyl, tert-butyl, amyl, tert-amyl, hexyl, heptyl, octyl, isooctyl, 2-ethylhexyl, 1,1,3,3-tetramethylbutyl, nonyl, decyl, isodecyl, dodecyl, isododecyl and octadecyl. From the viewpoints of weather resistance and discoloration resistance, it is preferable that any one of $R^3$ and $R^4$ is a hydrogen atom and another of them is an ethyl group or an isodecyl group.

Specific examples of an oxanilide ultraviolet absorber represented by the above general formula (I) are the following compounds from No.1 to No.4.

Compound No.1

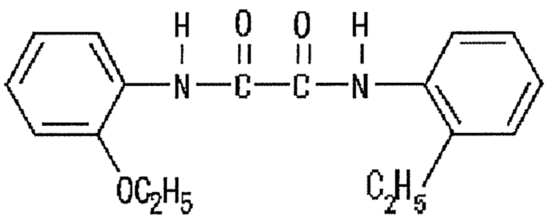

Compound No.2

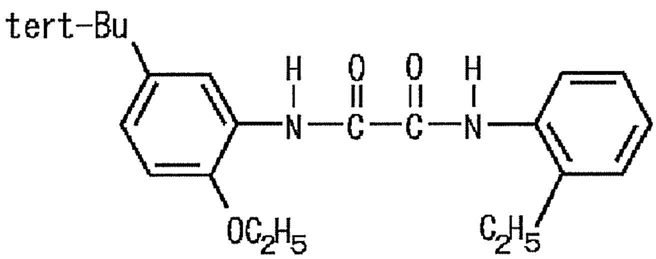

Compound No.3

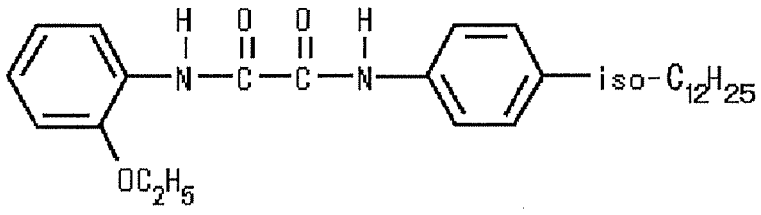

Compound No.4

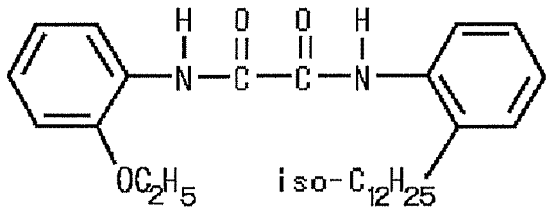

The amount of the oxanilide ultraviolet absorber of the component (C) used in the present invention is 1 to 20 mass parts relative to 100 mass parts of polyvinyl chloride resin. From the viewpoints of transparency, weather resistance and discoloration resistance, 1 to 15 mass parts are preferable and 3 to 10 mass parts are the optimal. If the amount used is less than 0.01 mass parts, the weather resistance and the discoloration resistance are insufficient. If it exceeds 20 mass parts, a harmful effect occurs on transparency.

In the vinyl chloride resin composition for transparent products of the present invention, from the viewpoints of weather resistance, heat stability and discoloration resistance, it is preferable to contain one or more kinds of sugar alcohol as a component (D).

Examples of the above sugar alcohol are mannitol, maltitol, lactitol, sorbitol, erythritol, glycerin, xylitol and inositol. From the viewpoints of weather resistance, heat satability, discoloration resistance and transparency or the like, in particular mannitol, maltitol and lactitol are preferable.

The amount of the above sugar alcohol used is 0.001 to 1 mass parts relative to 100 mass parts of vinyl chloride resin. From the viewpoints of weather resistance, heat stability and discoloration resistance, 0.005 to 0.5 mass parts are preferable, 0.01 to 0.3 mass parts is particularly preferable.

A lubricant may be also added to the vinyl chloride resin composition for transparent products of the present invention, from the viewpoint of workability.

Examples of the known lubricants are hydrocarbon lubricants such as low molecular weight wax, paraffin wax, polyethylene wax, chlorinated hydrocarbon and fluorocarbon; natural wax lubricants such as carnauba wax and candelilla wax; fatty acid lubricants such as a higher fatty acid like lauric acid, stearic acid and behenic acid, or an oxy-fatty acid like hydroxystearic acid; aliphatic amide lubricants such as aliphatic amide compounds like stearylamide, laurylamide and oleylamide, or alkylene bis aliphatic amide like methylenebis(stearylamide) and ethylenebis(stearylamide); fatty acid alcohol ester lubricants such as fatty acid monovalent alcohol ester compounds like stearyl stearate and butyl stearate, or fatty acid polyalcohol ester compounds like glycerol tristearate, sorbitan tristearate, pentaerythritol tetrastearate, dipentaerythritol hexastearate, polyglycerol polyricinolate and cured castor oil, or complex ester compounds of monovalent fatty acids like adipic acid • stearic acid ester of dipentaerythritol, polybasic organic acid and polyalcohol; fatty alcoholic lubricants such as stearyl alcohol, lauryl alcohol and palmityl alcohol; metallic soaps; a montanic acid lubricants such as partially saponified montanic acid ester; acrylic lubricant; and silicone oil. The lubricants used for the present invention can be selected suitably from the above known lubricants.

Only one kind of these lubricants may be used or two or more kinds of them may be used together.

In the present invention, particularly from the viewpoint of transparency, it is preferable to use fatty acid alcohol ester lubricants such as complex ester compounds of monovalent fatty acid, polybasic organic acid and polyalcohol.

It is preferable that the content of lubricant is 0.001 to 10 mass parts relative to 100 mass parts of polyvinyl chloride resin when a lubricant is used for the composition of the present invention. In particular 0.05 to 5 mass parts

are preferable. If the content of lubricant is less than 0.001 mass parts, workability may be insufficient. If it exceeds 10 mass parts, performance decrease such as transparency decrease occurs.

In the manufacturing process of the vinyl chloride resin composition for transparent products of the present invention, the timing of blending the components from (A) to (C), if necessary, further other optional addition components such as the component (D) and lubricants, with vinyl chloride resin is not limited in particular. For example, two or more kinds selected from the components from (A) to (D), lubricants and other optional addition components may be combined into one pack to blend with vinyl chloride resin, or each component may be blended with vinyl chloride resin. In addition, in cases where combining into one pack is carried out, each component may be mixed after crushing respectively or may be crushed after mixing.

Examples of vinyl chloride resin used for the present invention are vinyl chloride resins such as polyvinyl chloride, chlorinated polyvinyl chloride (CPVC), polyvinylidene chloride, chlorinated polyethylene, chlorinated polypropylene, chlorinated rubber, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymer, vinyl chloride-alkyl, -cycloalkyl or -aryl maleimide copolymer, vinyl chloride-styrene-acrylonitrile terpolymer, vinyl chloride-butadiene copolymer, vinyl chloride-isoprene copolymer, vinyl chloride-chlorinated propylene copolymer, vinyl chloride-vinylidene chloride-vinyl acetate terpolymer, vinyl chloride-acrylic acid ester copolymer, vinyl chloride-maleic acid ester copolymer, vinyl chloride-methacrylic acid ester copolymer, vinyl chloride-acrylonitrile copolymer and vinyl chloride-urethane copolymer; and blended materials obtained by blending the above vinyl chloride resins with $\alpha$ -olefin polymers such as polyethylene, polypropylene, polybutene and poly-3-methylbutene, or polyolefins and copolymers thereof such as ethylene-vinyl acetate copolymer and ethylene-propylene copolymer; copolymers of polystyrene, acrylic resin or styrene with other monomer (such as maleic anhydride, butadiene and acrylonitrile), acrylonitrile-butadiene-styrene copolymer, methacrylic ester-butadiene-styrene copolymer, or polyurethane.

Metallic stabilizers generally used for vinyl chloride resin can be added to the vinyl chloride resin composition for transparent products of the present invention. However, in the present invention, it is not preferable to add lead stabilizers, (organic) tin stabilizers, cadmium stabilizers and barium stabilizers from the viewpoints of effects on the environment such as toxicity. Therefore, organic acid metallic salts other than these metals and composite stabilizers thereof can be optionally used within the range where the effects of the present invention are not negatively affected. However, in cases where these organic acid metallic salts are added, the transparency tends to decrease.

Examples of organic acid metallic salts used as the above metallic stabilizers in the present invention are salts of carboxylic acid, organic phosphoric acid or phenols with Li, Na, K, Ca, Mg, Sr, Zn, Cs or Al. These may be normal salt, acid salt, basic salt or perbasic complex.

Examples of the above carboxylic acid are, for example, caproic acid, caprylic acid, pelargonic acid, 2-ethylhexylic acid, capric acid, neodecanoic acid, undecylenic acid, lauric acid, myristic acid, palmitic acid, stearic acid, isostearic acid, 12-hydroxystearic acid, chlorostearic acid, 12-ketostearic acid, phenylstearic acid, ricinoleic acid, linoleic acid, linolenic acid, oleic acid, arachidic acid, behenic acid, erucic acid, brassidic acid and similar acids, and also naturally-produced acids such as tallow fatty acid, coconut oil fatty acid, tung oil fatty acid, soybean fatty acid and cotton seed oil fatty acid which are mixtures of the aforementioned acids; benzoic acid, p-t-butylbenzoic acid, ethylbenzoic acid, isopropylbenzoic acid, toluic acid, xylic acid, salicylic acid, 5-t-octylsalicylic acid, naphtheric acid, cyclohexanecarboxylic acid or the like.

In addition, examples of the aforementioned organic phosphoric acids are, for example, mono- or di- octylphosphoric acid, mono- or di-dodecylphosphoric acid, mono- or di- octadecylphosphoric acid, mono-or di- (nonylphenyl) phosphoric acid, phosphonic acid nonylphenyl ester, phosphonic acid stearyl ester or the like.

Furthermore, examples of the aforementioned phenols are phenol, cresol, ethylphenol, cyclohexylphenol, nonylphenol and dodecylphenol or the like.

The vinyl chloride resin composition for transparent products of the present invention can provide molded products having excellent physical properties such as high transparency and a high softening point. Therefore, it is preferable to be used as hard materials without adding plasticizers. However, it is possible to be used for semi-hard materials by adding 50 or less mass parts of plasticizer relative to 100 mass parts of vinyl chloride resin. As a plasticizer, the plasticizers usually used for vinyl chloride resin can be suitably used.

Examples of the above plasticizers are phthalate plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephthalate; adipate plasticizers such as dioctyl adipate, diisononyl adipate, diisodecyl adipate and di(butyldiglycol) adipate; phosphate plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; polyester plasticizers obtained by using polyalcohols such as ethylene glycol, diethylene glycol, triethylene glycol, 1,2-propylene glycol, 1,3-propylene glycol, 1,3-butanediol, 1,4-butanediol, 1,5-hexanediol, 1,6-hexanediol and neopentyl glycol, and dibasic acids such as oxalic acid, malonic acid, succinic acid, glutaric acid, adipic

acid, pimelic acid, suberic acid, azelaic acid, sebacic acid, phthalic acid, isophthalic acid and terephthalic acid, if necessary, further using monohydric alcohol and monocarboxylic acid as a stopper. Other examples are, tetrahydrophthalic acid plasticizers, azelaic acid plasticizers, sebacic acid plasticizers, stearic acid plasticizers, citric acid plasticizers, trimellitic acid plasticizers, pyromellitic acid plasticizers and biphenylene polycarboxylic acid plasticizers or the like.

In addition, various kinds of additive agents generally used as an additive agent for vinyl chloride resin, for example, an organic phosphite compound, a phenolic antioxidant or a sulfuric antioxidant, a hydrotalcite compound other than the zinc-modified hydrotalcite compound of the component (B), an epoxy compound, polyols, sugars, a $\beta$ -diketone compound, an ultraviolet absorber other than the oxanilide ultraviolet absorber of the component (C), a hindered amine light stabilizer, a filler, a flame retardant and a flame-retardant auxiliary agent or the like, can be added to the vinyl chloride resin composition for transparent products of the present invention within the range where the effects of the present invention are not negatively affected.

Examples of the above organic phosphite compound are triphenyl phosphite, tris(2,4-di-tert-butylphenyl)phosphite, tris(nonylphenyl)phosphite, tris(dinonylphenyl)phosphite, tris(mono-, di- mixed nonylphenyl)phosphite, diphenyl acid phosphite, 2,2'-methylenebis(4,6-di-tert-butylphenyl)octyl phosphite, diphenyldecyl phosphite, phenyl diisodecyl phosphite, tributyl phosphite, tri(2-ethylhexyl) phosphite, tridecyl phosphite, trilauryl phosphite, dibutyl acid phosphite, dilauryl acid phosphite, trilauryl trithio phosphite, bis(neopentyl glycol)· 1,4-cyclohexane dimethyl diphosphite, bis(2,4-di-tert-butylphenyl)pentaerythritol diphosphite, bis(2,6-di-tert-butyl-4-methylphenyl)pentaerythritol diphosphite, distearyl pentaerythritol diphosphite, phenyl-4,4'-isopropylidene diphenol pentaerythritol diphosphite, tetra($C_{12}$ to $C_{15}$ mixed alkyl)-4,4'-isopropylidene diphenyl diphosphite, hydrogenated-4,4'-isopropylidene diphenol polyphosphite, bis(octylphenyl) bis[4,4'-n-butylidene bis(2-tert-butyl-5-methylphenol)] 1,6-hexanediol diphosphite, tetratridecyl 4,4'-butylidene bis(2-tert-butyl-5-methylphenol)diphosphite, hexa(tridecyl) 1,1,3-tris(2-methyl-5-tert-butyl-4-hydroxyphenyl)butane triphosphite, 9,10-dihydro-9-oxa-10-phosphaphenanthrene-10-oxide and 2-butyl-2-ethylpropane diol 2,4,6-tri-tert-butylphenol monophosphite.

Examples of the aforementioned phenolic antioxidant are 2,6-di-tert-butyl-p-cresol, 2,6-diphenyl-4-octadecyloxyphenol, stearyl(3,5-di-tert-butyl-4-hydroxyphenyl)-propionate, distearyl(3,5-di-tert-butyl-4-hydroxybenzyl)phosphonate, thiodiethylene glycol bis [(3,5-di-tert-butyl-4-hydroxyphenyl)-propionate], 1,6-hexamethylenebis[(3,5-di-tert-butyl-4-hydroxyphenyl)propionate], 1,6-hexamethylenebis[(3,5-di-tert-butyl-4-hydroxyphenyl)propionic amide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butylic acid] glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalat e, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acryloyloxy-3-tert-butyl-5-methylbenzyl)phenol, 3,9-bis[1,1-dimethyl-2-1(3-tert-butyl-4-hydroxy-5-methylphenyl)propionyloxylethyl]-2,4, 8,10-tetraoxaspiro[5,5]undecane and triethylene glycol-bis[(3-tert-butyl-4-hydroxy-5-methylphenyl)propionate].

Examples of the aforementioned sulfur antioxidant are, for example, dialkyl thiodipropionates such as thiodipropionic acid esters of dilauryl, dimyristyl, myristylstearyl, distearyl, or the like, and ß-alkylmercapto propionic acid esters of polyols such as pentaerythritol tetra(ß-dodecylmercapto propionate).

The compounds represented by the following formula, for example, can be cited as the hydrotalcite compound other than the zinc-modified hydrotalcite compound of the above component (B).

$$Mg_{1-x}Al_x(OH)_2(A^{q-})_{x/q} \cdot {}_aH_2O$$

In the formula, q is 1 or 2, $A^{q-}$ is an anion having the value q, namely $(CO_3)^{2-}$ or $(ClO_4)^-$, X represents $0<X\leq0.5$, and a represents 0 or a positive number.

Representative examples of the hydrotalcite other than the component (B) are as follows:

$$Mg_{0.750}Al_{0.250}(OH)_2(CO_3)_{0.125} \bullet 0.5H_2O$$

$$Mg_{0.692}Al_{0.308}(OH)_2(CO_3)_{0.154} \bullet 0.1H_2O$$

$$Mg_{0.683}Al_{0.317}(OH)_2(CO_3)_{0.159} \bullet 0.5H_2O$$

$$Mg_{0.667}Al_{0.333}(OH)_2(CO_3)_{0.167} \bullet 0.1H_2O$$

$$Mg_{0.750}Al_{0.250}(OH)_2(ClO_4)_{0.250} \bullet 0.5H_2O$$

$Mg_{0\cdot692}$Alo.308(OH)2(C10 4)o.308 - $0.1H_2O$

$Mg_{0.667}Al_{0.333}(OH)_2(ClO_4)_{0.333} \cdot 0.1H_2O$

Examples of commercial products are DHT-4A (manufactured by Kyowa Chemical Industry Co., Ltd.), and Magceler-1 (manufactured by Kyowa Chemical Industry Co., Ltd.).

Examples of the aforementioned epoxy compounds are epoxidized animal and plant oils such as epoxidized soybean oil, epoxidized linseed oil, epoxidized tung oil, epoxidized fish oil, epoxidized beef tallow oil, epoxidized castor oil and epoxidized safflower oil; epoxy compounds such as epoxidized methyl stearate, epoxidized butyl stearate, epoxidized 2-ethylhexyl stearate, epoxidized stearyl stearate, epoxidized polybutadiene, tris(epoxypropyl) isocyanurate, epoxidized tall oil fatty acid ester, epoxidized linseed oil fatty acid ester, bisphenol A diglycidyl ether, vinylcyclohexene diepoxide, dicyclohexene diepoxide, 3,4-epoxycyclohexylmethyl and epoxycyclohexane carboxylate.

Examples of the aforementioned polyol compounds are trimethylolpropane, ditrimethylolpropane, pentaerythritol, dipentaerythritol, polypentaerythritol, stearic acid half ester of pentaerythritol or dipentaerythritol, bis(dipentaerythritol)adipate, diglycerine and tris(2-hydroxyethyl)isocyanurate.

Examples of sugars are xylose, sucrose, trehalose, fructose, maltose and lactose.

Examples of the aforementioned ß-diketone compounds are acetylacetone, triacetylmethane, 2,4,6-heptatrione, butanoyl acetylmethane, lauroyl acetylmethane, palmitoyl acetylmethane, stearoyl acetylmethane, phenylacetyl acetylmethane, dicyclohexylcarbonylmethane, benzoylformylmethane, benzoylacetylmethane, dibenzoylmethane, octylbenzoyl methane, stearoyl benzoyl methane, bis(4-octylbenzoyl) methane, benzoyl diacetyl methane, 4-methoxybenzoyl benzoyl methane, bis(4-carboxymethylbenzoyl)methane, 2-carboxymethyl benzoyl acetyl octyl methane, dehydroacetic acid, cyclohexane-1,3-dione, 3,6-dimethyl-2,4-dioxy cyclohexane -1 carboxylic acid methyl ester, 2-acetylcyclohexanone, dimedone and 2-benzoylcyclohexane.

Furthermore, the metallic salt of these ß-diketone compounds can also be used. Examples of metal species, which can provide the above ß-diketone metallic salt, are alkaline metals such as lithium, sodium and potassium; and magnesium, calcium, strontium, zinc and aluminum.

Examples of the aforementioned ultraviolet absorber are 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone) 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolyl)phenol and polyethylene glycol ester of 2-(2-hydroxy-3-tert-butyl-5-carboxyphenyl)benzotriazole; benzoates such as phenyl salicylate, resorcinol monobenzoate, 2,4-di-tert-butylphenyl-3,5-di-tert-butyl-4-hydroxybenzoate and hexadecyl-3,5-di-tert-butyl-4-hydroxybenzoate; cyanoacrylates such as ethyl-$\alpha$-cyano-ß,ß-diphenylacrylate, methyl-2-cyano-3-methyl-3-(p-methoxyphenyl)acrylate.

Examples of the above hindered amine light stabilizer are hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butanetetracarboxylate, tetrakis(1,2,2,6,6-pentamethyl-4-piperidyl)butanetetracarboxylate, bis(1,2,2,6,6-pentamethyl-4-piperidyl)·di(tridecyl) -1, 2, 3, 4-butanetetracarboxylate, bis(1,2,2,6,6-pentamethyl-4-piperidyl)-2-butyl-2-(3,5-di-tert-butyl-4-hydroxybenzyl)mal onate, 1-(2-hydroxyethyl)-2,2,6,6-tetramethyl-4-piperidynol/diethyl succinate condensation product, 1,6-bis(2,2,6,6-tetraethyl-4-piperidylamino)hexane/dibromoethane condensation product, 1,6-bis(2,2,6,6-tetramethyl-4-piperidylamino)hexane/ 2,4-dichloro-6-morpholino-s-triazine condensation product, 1,6-bis(2,2,6,6-tetramethyl-4-piperidylamino)hexane/2,4 -dichloro-6-tert-octylamino-s-triazine condensation product, 1,5,8,12-tetrakis[2,4-bis(N-butyl-N-(2,2,6,6-tetramethyl-4-piperidyl)amino)-s-triazine -6-yl]-1,5,8,12-tetraazadodecane, 1,5,8,12-tetrakis[2,4-bis(N-butyl-N-(1,2,2,6,6-pentamethyl-4-piperidyl)amino)-s-triazine -6-yl]-1,5,8,12-tetraazadodecane, 1,6,11-tris[2,4-bis(N-butyl-N-(2,2,6,6-tetramethyl-4-piperidyl)amino)-s-triazine-6 -ylamino]undecane and 1,6,11-tris[2,4-bis(N-butyl-N-(1,2,2,6,6-pentamethyl-4-piperidyl)amino)-s-triazine-6 -ylamino]undecane.

Specific examples of the aforementioned fillers are calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, sodium aluminosilicate, hydrocalumite; mineral silicates such as aluminum silicate, magnesium silicate, calcium silicate and zeolite; activated clay, talc, clay, red iron oxide, asbestos, antimony trioxide, silica, glass beads, mica, sericite, glass flake, asbestos, wollastonite, potassium titanate, PMF, satin spar, zonolite, MOS, phosphate fiber, glass fiber, carbon fiber and aramid fiber or the like.

Examples of the aforementioned flame retardants and flame-retardant auxiliary agents are a triazine ring-containing compound, metallic hydroxide, and also inorganic phosphorus, a halogen flame retardant, a silicone flame retardant, a phosphoric acid ester flame retardant, a condensed phosphoric acid ester flame retardant, an intumescent

flame retardant, antimony oxide such as an antimony trioxide, other inorganic flame-retardant auxiliary agents and organic flame-retardant auxiliary agents.

Examples of the aforementioned triazine ring-containing compound are melamine, ammeline, benzoguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine and 1,3-hexylenedimelamine or the like.

Examples of the above aforementioned hydroxide are magnesium hydroxide, aluminum hydroxide, calcium hydroxide, barium hydroxide, zinc hydroxide and Kisuma 5A (commercial name of magnesium hydroxide: manufactured by Kyowa Chemical Industry Co., Ltd).

Examples of the above phosphoric acid ester flame retardant are trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyldiphenyl phosphate, xylenyldiphenyl phosphate, tris isopropylphenyl phosphate, 2-ethylhexyldiphenyl phosphate, t-butylphenyldiphenyl phosphate, bis(t-butylphenyl)phenyl phosphate, tris(t-butylphenyl)phosphate, isopropylphenyldiphenyl phosphate, bis(isopropylphenyl)diphenylphosphate and tris(isopropylphenyl)phosphate.

Examples of the aforementioned condensation phosphoric acid ester flame retardant are 1,3-phenylene bis(diphenylphosphate), 1,3-phenylene bis(dixylenylphosphate) and bisphenol A bis(diphenylphosphate). Examples of the intumescent flame retardant are ammonium salt of polyphosphoric acid or the like and amine salt.

Examples of the aforementioned other inorganic flame-retardant auxiliary agent are inorganic compounds such as titanium oxide, aluminum oxide, magnesium oxide and talc, and their surface-treated products. Examples of these inorganic flame-retardant auxiliary agents are various types of commercial products such as TIPAQUE R-680 (commercial name of titanium oxide manufactured by ISHIHARA SANGYO KAISHA, LTD.) and Kyowa MAG 150(commercial name of magnesium oxide manufactured by Kyowa Chemical Industry Co., Ltd).

The example of the aforementioned other organic flame-retardant auxiliary agent is pentaerithritol.

Stabilization auxiliary agents generally used for vinyl chloride resins can be added to the vinyl chloride resin composition for transparent products of the present invention within the range where the effects of the present invention are not negatively affected. Examples of such stabilization auxiliary agents are diphenylthiourea, anilinodithiotriazine, melamine, benzoic acid, cinnamic acid, p-tert-butylbenzoic acid, zeolite and perchlorate or the like.

The vinyl chloride resin composition for transparent products of the present invention can further contain additives usually used for the vinyl chloride resin, if necessary, within the range where the effects of the present invention are not negatively affected. The examples of the said additives are crosslinking agents, antistatic agents, tarnish inhibitors, plate-out inhibitors, surface treatment agents, fluorescent agents, antimold, disinfectants, foaming agents, metal deactivators, mold lubricants, pigments, processing materials, antioxidants and light stabilizers.

The vinyl chloride resin composition for transparent products of the present invention can be used without relation to the processing method for vinyl chloride resin. For example, it can be preferably used for roll process, extrusion process, meltdown casting method and pressure molding process or the like.

Hereafter, the present invention will be explained further in detail using examples and comparative examples. However, the present invention should not be limited by these examples at all.

EXAMPLE

[Examples 1 to 4 and Comparative Examples 1 to 4]

After blending each component described in the following [Table 1] using the Henschel Mixer, the mixture was kneaded with a roll under the condition in that the working temperature is 170°C, the roll revolution is 30rpm and the kneading time is 3 minutes using two roll formers (manufactured by OHTAKE MACHINERY) to prepare a sheet of 600 mm long × 300 mm wide × 0.6 mm thick.

The following compound No. 1 was used as an oxanilide ultraviolet absorber of the component (C) described in Table 1.

Compound No. 1

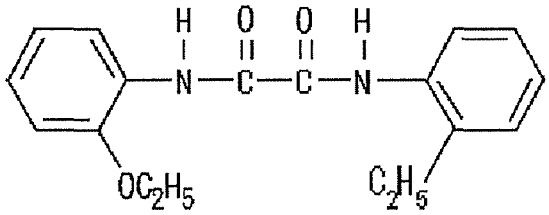

In addition, as comparative examples, sheets were prepared in the same way with regard to a compound wherein the component (C) was not blended with, a compound wherein the following comparative compounds-1 and -2 of benzotriazole ultraviolet absorber were blended with instead of the component (C) and a compound wherein the following comparative compound-3 of benzophenone ultraviolet absorber was blended with instead of the component (C).

Comparative compound-1

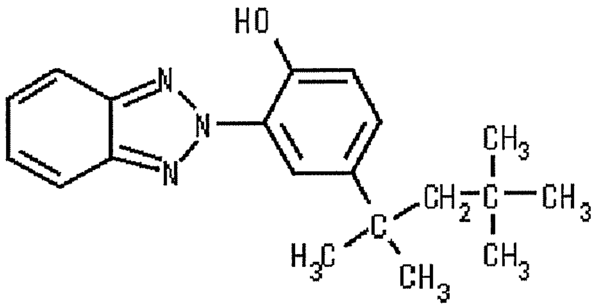

Comparative compound-2

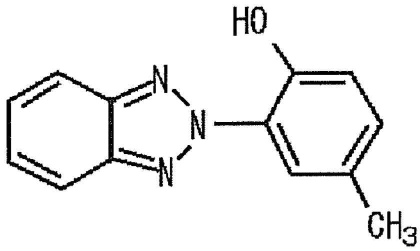

Comparative compound-3

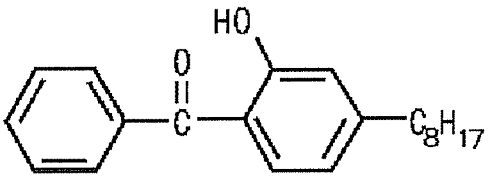

The obtained sheets were put in the gear oven at 190°C (PHH-201: commercial name of product manufactured by HAYASAKARIKOH CO., Ltd.) and were sampled every 15 minutes and the blackening time (minute) was measured to evaluate the heat stability.

The two sheets 0.6mm thick obtained as mentioned above were superimposed each other and press processing

was carried out at 190°C for 5 or 30 minutes to prepare a sheet 1mm thick respectively using a press forming machine (manufactured by TOHO MACHINERY CO., Ltd.: 30 tons). Using these sheets, a discoloration resistance test, a transparency test and a weather resistance test were carried out according to the following methods.

<Discoloration resistance test>

Regarding the aforementioned sheets 1mm thick which were obtained by performing press processing at 190°C for 5 minutes and 30 minutes, the yellowness levels (Y.I.) were measured respectively using the colorimeter TC-8600A (commercial name of product manufactured by Tokyo Denshoku Co., Ltd.). The results are shown in [Table 1].

<Transparency test>

Regarding the aforementioned sheets 1mm thick which were obtained by performing press processing at 190°C for 5 minutes, the Haze value was measured using the HAZE-GARD II (commercial name of product manufactured by Toyo Seiki Seisaku-sho, Ltd.).

<Weather resistance test>

Regarding the aforementioned sheets 1mm thick which were obtained by performing press processing at 190°C for 5 minutes, Δ Y.I. were measured after ultraviolet irradiation for 300 hours and 600 hours by the Sunshine weather meter (manufactured by HAYASAKARIKOH CO., Ltd.: raining for 18 minutes out of 120 minutes). In Examples 1 and 4, Δ Y.I. were also measured after ultraviolet irradiation for 900 hours.

The results of each test are shown in [Table 1].

[Table 1]

| | | Examples | | | | Comparative examples | | | |
|---|---|---|---|---|---|---|---|---|---|
| | | 1 | 2 | 3 | 4 | 1 | 2 | 3 | 4 |
| Vinyl chloride resin*1 | | 100 | 100 | 100 | 100 | 100 | 100 | 100 | 100 |
| Phenolic antioxidant*2 | | 0.1 | 0.1 | 0.1 | 0.1 | 0.1 | 0.1 | 0.1 | 0.1 |
| Stearoyl benzoylmethane | | 0.5 | 0.5 | 0.5 | 0.5 | 0.5 | 0.5 | 0.5 | 0.5 |
| Lubricant*3 | | 0.5 | 0.5 | 0.5 | 0.5 | 0.5 | 0.5 | 0.5 | 0.5 |
| Component (A): Zinc laurate | | 0.3 | 0.3 | 0.3 | 0.3 | 0.3 | 0.3 | 0.3 | 0.3 |
| Component (B): Alkamizer P-93*4 | | 2.7 | 2.7 | 2.7 | 2.7 | 2.7 | 2.7 | 2.7 | 2.7 |
| Component (C): Compound No.1 | | 5.0 | 3.0 | 10.0 | 5.0 | | | | |
| Component (D): Maltitol*5 | | | | | 0.05 | | | | |
| Comparative compound-1 | | | | | | | 5.0 | | |
| Comparative compound-2 | | | | | | | | 5.0 | |
| Comparative compound-3 | | | | | | | | | 5.0 |
| Thermal stability (blackening time; minute) | | 165 | 165 | 165 | 180 | 165 | 165 | 135 | 165 |
| Colorability resistance (Y.I.) | 5 minutes | 19.8 | 19.4 | 19.7 | 20.2 | 19.2 | 42.4 | 50.6 | 26.5 |
| | 30 minutes | 90.8 | 103.5 | 92.3 | 79.5 | 119.8 | 89.8 | 122.3 | 121.7 |
| Transparency Haze value (%) (mm) | | 4.13 | 4.21 | 4.29 | 5.05 | 4.29 | 4.30 | 10.2 | 4.29 |

(continued)

| | | Examples | | | | Comparative examples | | | |
|---|---|---|---|---|---|---|---|---|---|
| | | 1 | 2 | 3 | 4 | 1 | 2 | 3 | 4 |
| Weatherability test (ΔY.I.) | 300 hours | 1.1 | 2.8 | 1.2 | 1.2 | 99.9 | 4.8 | 13.8 | 5.3 |
| | 600 hours | 7.1 | 9.3 | 6.8 | 6.9 | 143.8 | 13.3 | 10.4 | 10.2 |
| | 900 hours | 27.9 | - | - | 10.4 | - | - | - | - |

*1: ZEST1000Z (Commercial name of product manufactured by Shin Dai-Ichi Vinyl Corporation)
*2: Tetrakis [methylene-3-(3', 5' -ditert-butyl-4'-hydroxyphenyl)propyonate]methane
*3: G-72 (polymer complex ester) (manufactured by Cognis Oleo Chemicals Japan Ltd.)
*4: Zinc-modified hydrotalcite (manufactured by Kyowa Chemical Industry Co., Ltd.) $Mg_{3.0}ZnAl_2(OH)_{12}(CO_2) \cdot 3H_2O$ $(Mg_{3/6}Zn_{1/6}Al_{2/6}(OH)_2(CO_2)_{1/6} \cdot 0.5H_2O$ converted according to the describing method of Claim 2)
*5: Crystal mabit (manufactured by HAYASHIBARA SHOJI, INC.)

From the results of Table 1, it was confirmed that the vinyl chloride resin composition for transparent products of the present invention had small degree of yellowness level after heat molding and has excellent discoloration resistance.

In addition, it was confirmed that the degree of discoloration of the vinyl chloride resin composition of the present invention, wherein the oxanilide ultraviolet absorber is added to, is lower than that of the vinyl chloride resin composition wherein other ultraviolet absorber is added to, when ultraviolet light was irradiated for a long-time, that is, the vinyl chloride resin composition of the present invention has excellent weather resistance.

INDUSTRIAL APPIICABILITY

The vinyl chloride resin composition for transparent products of the present invention can be used for transparent molded products, in particular hard and semi-hard transparent molded products, especially, products requiring glass-like transparency such as cases, industrial boards, decorative boards, trays, film, shrink film, sheets, building materials, pipes for water supply and drainage, plates, joints, materials for automobile, hoses, IC cases and bottles.

**Claims**

1. A vinyl chloride resin composition for transparent products: comprising (A) 0.001 to 10 mass parts of at least one kind of organic acid zinc salt, (B) 0.001 to 10 mass parts of at least one kind of zinc-modified hydrotalcite compound and (C) 1 to 20 mass parts of oxanilide ultraviolet absorber represented by the following general formula (I) relative to 100 mass parts of vinyl chloride resin.

(I)

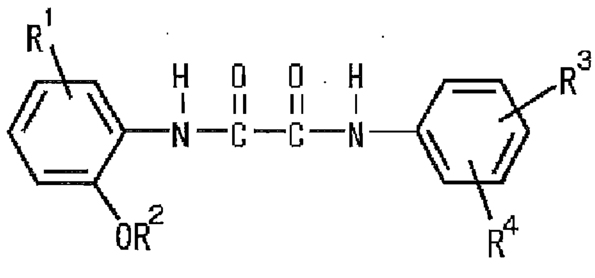

(I)

$R^1$ in the formula is a hydrogen atom or a straight-chain or branched alkyl group having 1 to 12 carbon atoms, $R^2$ is a straight-chain or branched alkyl group having 1 to 12 carbon atoms, $R^3$ and $R^4$ are each a hydrogen atom or a straight-chain or branched alkyl group having 1 to 18 carbon atoms independently.

2. A vinyl chloride resin composition for transparent products described in Claim 1, wherein further 0.001 to 1.0 mass parts of at least one kind of sugar alcohol is contained as a component (D).

**3.** A vinyl chloride resin composition for transparent products described in Claim 1 or 2, wherein (B) the abovementioned zinc-modified hydrotalcite compound is a zinc-modified hydrotalcite compound represented by the following general formula (II);

$$M_{y1}Zn_{y2}Al_x(OH)_2(CO_3)_{x/2} \bullet mH_2O \qquad (II)$$

M in the formula is magnesium, or, magnesium and calcium, x, y1 and y2 are numbers satisfying conditions represented by the following formulae respectively, m is 0 or an optional positive number; $0< x\leq 0.5$, $y1+y2=1-x$, $y1\geq y2$, $0.3\leq y1<1$, $0<y2<0.5$.

**4.** A vinyl chloride resin composition for transparent products described in any of Claims 1 to 3, wherein the above composition does not contain an organotin compound.

**5.** A transparent molded article obtained by molding a vinyl chloride resin composition for transparent products described in any of Claims 1 to 4.

## Patentansprüche

**1.** Vinylchloridharzzusammensetzung für transparente Produkte: umfassend (A) 0,001 bis 10 Massenteile von mindestens einer Art von Zinksalz einer organischen Säure, (B) 0,001 bis 10 Massenteile von mindestens einer Art von zinkmodifizierter Hydrotalcitverbindung und (C) 1 bis 20 Massenteile eines Oxanilid-Ultraviolett-Absorptionsmittels, dargestellt durch die folgende allgemeine Formel (I), bezogen auf 100 Massenteile Vinylchloridharz,

(I)

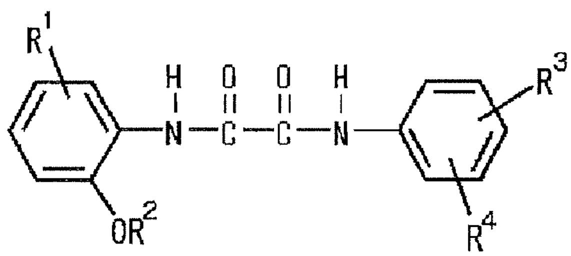

(I)

wobei $R^1$ in der Formel ein Wasserstoffatom oder eine geradkettige oder verzweigte Alkylkette mit 1 bis 12 Kohlenstoffatomen ist, $R^2$ eine geradkettige oder verzweigte Alkylgruppe mit 1 bis 12 Kohlenstoffatomen ist, $R^3$ und $R^4$ jeweils unabhängig ein Wasserstoffatom oder eine geradkettige oder verzweigte Alkylgruppe mit 1 bis 18 Kohlenstoffatomen sind.

**2.** Vinylchloridharzzusammensetzung für transparente Produkte gemäß Anspruch 1, wobei zusätzlich 0,001 bis 1,0 Massenteile von mindestens einer Art von Zuckeralkohol als eine Komponente (D) enthalten sind.

**3.** Vinylchloridharzzusammensetzung für transparente Produkte gemäß Anspruch 1 oder 2, wobei (B) die oben genannte zinkmodifizierte Hydrotalcitverbindung eine zinkmodifizierte Hydrotalcitverbindung, dargestellt durch die folgende allgemeine Formel (II) ist:

$$M_{y1}Zn_{y2}Al_x(OH)_2(CO_3)_{x/2} \cdot mH_2O \qquad (II)$$

wobei M in der Formel Magnesium oder Magnesium und Calcium ist, x, y1 und y2 Zahlen sind, welche jeweils Bedingungen, dargestellt durch folgende Formeln erfüllen, m 0 oder wahlweise eine positive Zahl ist; $0<x\leq 0,5$, $y1+y2=1-x$, $y1\geq y2$, $0,3\leq y1<1$, $0<y2<0,5$.

**4.** Vinylchloridharzzusammensetzung für transparente Produkte gemäß einem der Ansprüche 1 bis 3, wobei die oben genannte Zusammensetzung keine Organozinnverbindung enthält.

**5.** Transparenter geformter Artikel, welcher durch Formen einer Vinylchloridharzzusammensetzung für transparente Produkte gemäß einem der Ansprüche 1 bis 4 erhalten wird.

**Revendications**

1. Composition de résine de chlorure de vinyle pour produits transparents, comprenant, pour 100 parties en masse de résine de chlorure de vinyle :

   A) 0,001 à 10 parties en masse d'au moins un sel de zinc et d'acide organique,
   B) 0,001 à 10 parties en masse d'au moins un composé de type hydrotalcite modifiée avec du zinc,
   C) et 1 à 20 parties en masse d'un absorbant UV de type oxanilide, représenté par la formule générale (I) suivante :

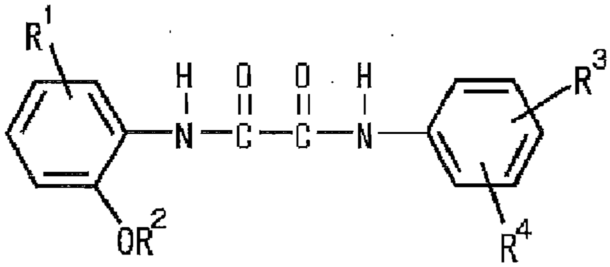

(I)

   dans laquelle formule

   - $R^1$ représente un atome d'hydrogène ou un groupe alkyle à chaîne droite ou ramifiée, comportant de 1 à 12 atomes de carbone,
   - $R^2$ représente un groupe alkyle à chaîne droite ou ramifiée, comportant de 1 à 12 atomes de carbone,
   - et $R^3$ et $R^4$ représentent chacun, indépendament, un atome d'hydrogène ou un groupe alkyle à chaîne droite ou ramifiée, comportant de 1 à 18 atomes de carbone.

2. Composition de résine de chlorure de vinyle pour produits transparents, conforme à la revendication 1, qui contient en outre, en tant que composant (D), 0,001 à 1,0 partie en masse d'au moins un alcool de sucre.

3. Composition de résine de chlorure de vinyle pour produits transparents, conforme à la revendication 1 ou 2, dans laquelle le composé (B) de type hydrotalcite modifiée avec du zinc, mentionné plus haut, est un composé de type hydrotalcite modifiée avec du zinc qui est représenté par la formule générale (II) suivante :

$$M_{y1}Zn_{y2}Al_x(OH)_2(CO_3)_{x/2}.mH_2O \quad (II)$$

   dans laquelle formule

   - M représente du magnésium, ou bien du magnésium et du calcium,
   - les indices x, y1 et y2 sont des nombres respectant les conditions exprimées respectivement par les formules suivantes :

$$0 < x \leq 0,5 \qquad y1 + y2 = 1 - x \qquad y1 \geq y2 \qquad 0,3 \leq y1 < 1 \qquad 0 < y2 < 0,5$$

   - et le coefficient m vaut 0 ou est un nombre positif optionnel.

4. Composition de résine de chlorure de vinyle pour produits transparents, conforme à l'une des revendications 1 à 3, laquelle composition ne contient pas de composé organostannien.

5. Article moulé transparent obtenu par moulage d'une composition de résine de chlorure de vinyle pour produits transparents, conforme à l'une des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9067489 A
- JP 2003160707 A
- JP TOKKAIHEI3237140 A
- JP TOKKAIHEI6100749 A
- JP TOKKAISHO624739 A
- JP TOKKAI20081840 A
- JP 46002280 B
- JP TOKKOSHO4732198 B
- JP TOKKOSHO5030039 B
- JP TOKKOSHO4829477 B
- JP TOKKOSHO5129129 B